**Europäisches Patentamt**

**European Patent Office**

**Office européen des brevets**

(19)

(11) Veröffentlichungsnummer: **0 159 412**
**A2**

## (12) EUROPÄISCHE PATENTANMELDUNG

(21) Anmeldenummer: **84116161.5**

(22) Anmeldetag: **21.12.84**

(51) Int. Cl.⁴: **G 01 N 13/02**

(30) Priorität: **23.03.84 DE 3410778**

(43) Veröffentlichungstag der Anmeldung: **30.10.85**
**Patentblatt 85/44**

(84) Benannte Vertragsstaaten: **AT BE CH DE FR GB IT LI LU NL SE**

(71) Anmelder: **FOGRA Deutsche Forschungsgesellschaft für Druck- und Reproduktionstechnik e.V., Streitfeldstrasse 19, D-8000 München 80 (DE)**

(72) Erfinder: **Stockhausen, Norbert Dr., Humboldtstrasse 3, D-8000 München 90 (DE)**

(74) Vertreter: **Tetzner, Volkmar, Dr.-Ing. Dr. Jur., Van-Gogh-Strasse 3, D-8000 München 71 (DE)**

(54) Verfahren und Vorrichtung zur Messung und/oder Kontrolle der Oberflächenspannung einer Flüssigkeit.

(57) Die Erfindung betrifft ein Verfahren sowie eine Vorrichtung zur Messung der Oberflächenspannung einer Flüssigkeit, wobei die Erzeugung stehender, kreisförmiger Kapillarwellen durch spektrale Anregung der Flüssigkeit erfolgt und aus dem der reflektierten Lichtstrahlung entsprechenden Meßsignal innerhalb eines ausgewählten Frequenzbereiches die Spektralfunktion ermittelt wird. Ein solches Verfahren zeichnet sich vor allem durch Unabhängigkeit von äußeren Störeinflüssen aus und läßt sich auf einfache Weise automatisieren.

### Verfahren und Vorrichtung zur Messung und/oder Kontrolle der Oberflächenspannung einer Flüssigkeit

Die Erfindung betrifft ein Verfahren entsprechend dem Oberbegriff des Anspruches 1 zur Messung und/oder Kontrolle der Oberflächenspannung einer Flüssigkeit. Die Erfindung bezieht sich ferner auf eine Vorrichtung zur Durchführung dieses Verfahrens.

Viele organische Substanzen erniedrigen bei Lösung in Wasser dessen Oberflächenspannung. Durch Messung der Oberflächenspannung kann daher das Vorhandensein und der Anteil bestimmter organischer Substanzen im Wasser ermittelt werden.

Eine praktische Anwendung dieses Verfahrens besteht in der Feuchtmitteleinstellung im Offsetdruck mit Hilfe von oberflächenaktiven Substanzen. Für die prozeßtechnische Realisierung muß die Oberflächenspannung meßtechnisch mittels eines Sensors erfaßt werden.

Bei einem von der Anmelderin entwickelten Verfahren (DE-OS 32 01 410) wird zu diesem Zweck ein kreisförmiger Bereich der Flüssigkeits-Oberfläche zu Schwingungen angeregt, so daß ein System kreisringförmiger stehender Kapillarwellen erzeugt wird, deren Auftreten durch Messung der Intensität einer an der Flüssigkeits-Oberfläche reflektierten Lichtstrahlung bestimmt wird.

Der Erfindung liegt nun die Aufgabe zugrunde, dieses Verfahren dahin weiterzuentwickeln, daß es eine besonders einfache, selbsttätige und weitgehend wartungsfreie Arbeitsweise ermöglicht und daß die Messung sehr erschütterungsunempfindlich ist (letzteres erweist sich für die praktische Anwendung als besonders wesentlich, da die Messung in unmittelbarer Nähe von laufenden Druckmaschinen erfolgen muß).

Diese Aufgabe wird erfindungsgemäß durch die kennzeichnenden Merkmale des Anspruches 1 gelöst.

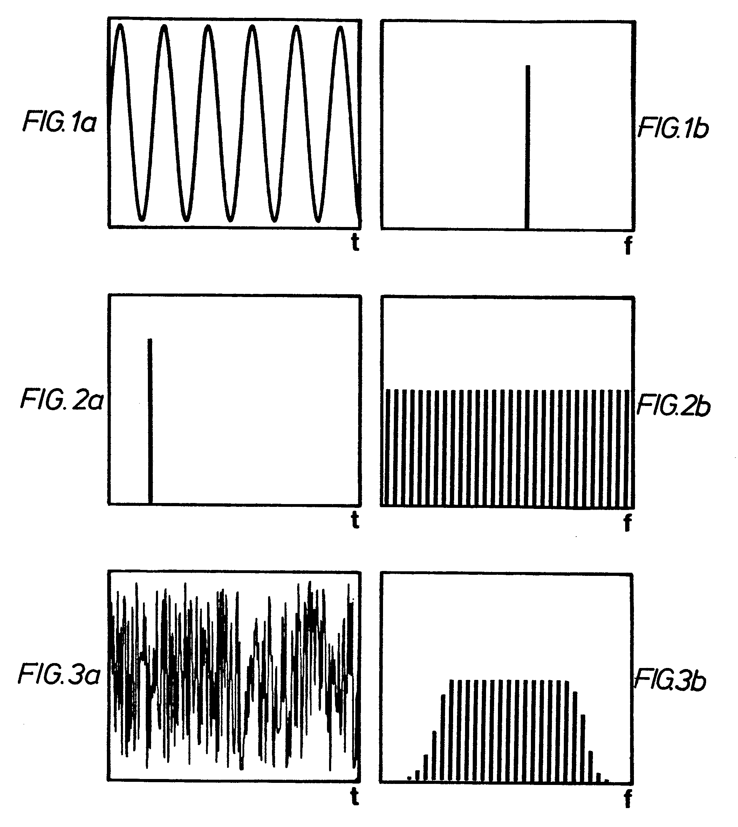

Zum Verständnis des Prinzips des erfindungsgemäßen Verfahrens seien zunächst anhand der Fig.1 bis 4 einige Formen der Anregung hinsichtlich ihrer Zeitfunktion und ihrer Spektralfunktion erläutert.

Fig.1a zeigt die Zeitfunktion einer periodischen Anregung (in der Ordinate ist die Amplitude der periodischen Schwingung und in der Abszisse die Zeit t dargestellt). Die Spektralfunktion (Häufigkeit in der Ordinate und Frequenz f in der Abszisse) ist in Fig.1b dargestellt. Eine periodische Anregung gemäß Fig.1a entspricht somit in der spektralen Darstellung einer einzelnen Nadel.

Fig.2a zeigt demgegenüber eine Stoßanregung ("Impact") durch einen einmaligen Stoß bzw. Impuls. In der Spektralfunktion (Fig.2b) wird diese Stoßanregung durch ein breites Frequenzband (zahlreiche Nadeln) repräsentiert.

Eine weitere Möglichkeit einer spektralen Anregung ist in Fig.3a dargestellt. Hier erfolgt die Anregung in Form eines Bandrauschens. Die Spektralfunktion dieses Bandrauschens ist in Fig.3b schematisch veranschaulicht.

Wird nun eine Flüssigkeits-Oberfläche durch eine spektrale Anregung (nach Art von Fig.2a oder Fig. 3a) zu Schwingungen in Form stehender, kreisförmiger Kapillarwellen angeregt, so kann die Flüssigkeits-Oberfläche je nach den entsprechenden Randbedingungen wie eine Saite nur in diskreten Moden schwingen (Grundton und Obertöne). Die Zeitfunktion einer solchen gedämpften Schwingung der Flüssigkeits-Oberfläche ist in Fig.4a, ihre Spektralfunktion in Fig.4b dargestellt.Die Flüssigkeits-Oberfläche wirkt daher wie ein Filter, das nur die passenden Frequenzen der spektralen Anregung akzeptiert.

Die Messung der Oberflächenspannung von Flüssigkeiten mittels Stoßanregung von stehenden Kapillarwellen erweist sich als völlig unabhängig von äußeren Störeinflüssen, da letztere gewissermaßen in das Anregungsspektrum integriert werden. Im Unterschied hierzu können bei einer rein periodischen Anregung (gemäß Fig.1a) äußere Einflüsse bereits eine Schwingung anregen, auch wenn die Frequenz der periodischen Anregung neben der Resonanzfrequenz liegt. In diesem Falle wäre eine kostspielige Schwingungsisolation des Meßsystems notwendig. Das erfindungsgemäße Meßverfahren zeichnet sich daher durch große Unempfindlichkeit gegenüber Erschütterungseinflüssen der Umgebung aus.

Ein weiterer Vorteil der spektralen Anregung der Flüssigkeit liegt in der zeitlichen Begrenzung des Meßvorganges. Diese Forderung steht in engem Zusammenhang mit der Reproduzierbarkeit der Geometrie der Flüssigkeits-Oberfläche, was im folgenden näher erläutert sei.

Um eine freie Oberflächenschwingung zu erhalten, muß die Flüssigkeits-Oberfläche festen Randbedingungen unterworfen werden. Der Tripelpunkt festflüssig-gasförmig an der Gefäßwand darf sich während der Schwingung nicht bewegen, da sonst die auftreffende Welle nur unvollständig reflektiert wird. Die Flüssigkeits-Oberfläche muß daher an einer scharfen Kante bzw. einer Schneide "aufgehängt" werden.

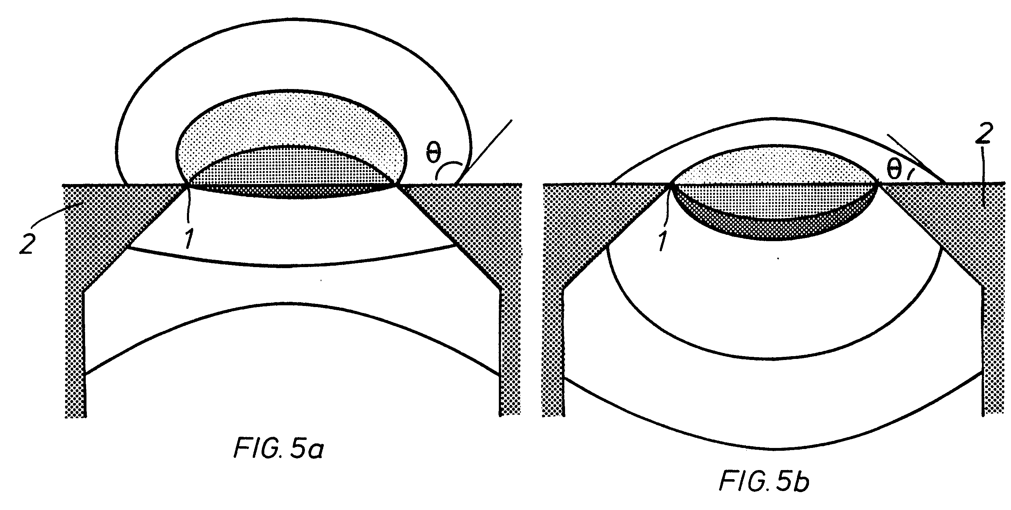

Fig.5 veranschaulicht eine Fassung, die die Möglichkeit bietet, bei Flüssigkeiten mit unterschiedlicher Oberflächenspannung eine ebene Oberfläche zu erzielen. Fig.5a veranschaulicht schematisch die Verhältnisse bei Verwendung von Wasser als Flüssigkeit und Fig.5b die Verhältnisse bei Benutzung einer Mischung von Wasser und Alkohol.

Ist das Gefäß ganz gefüllt, so ergibt sich eine konvexe Flüssigkeits-Oberfläche, die je nach Oberflächenspannung der Flüssigkeit eine unterschied-

liche Krümmung aufweist (Randwinkel $\Theta$ ). Die Kreisschneide 1 des Gefäßes 2 stellt eine Diskontinuität der Einfassung dar, an der die Flüssigkeitsoberfläche unterschiedliche Krümmungen annehmen kann, ohne daß der Tripelpunkt verschoben wird.

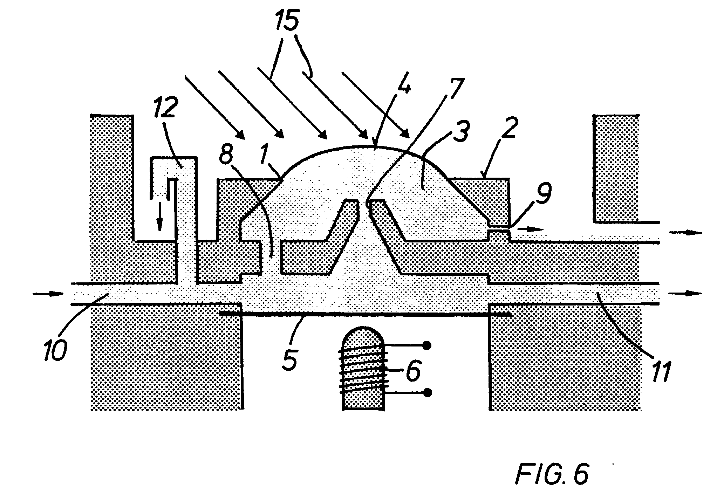

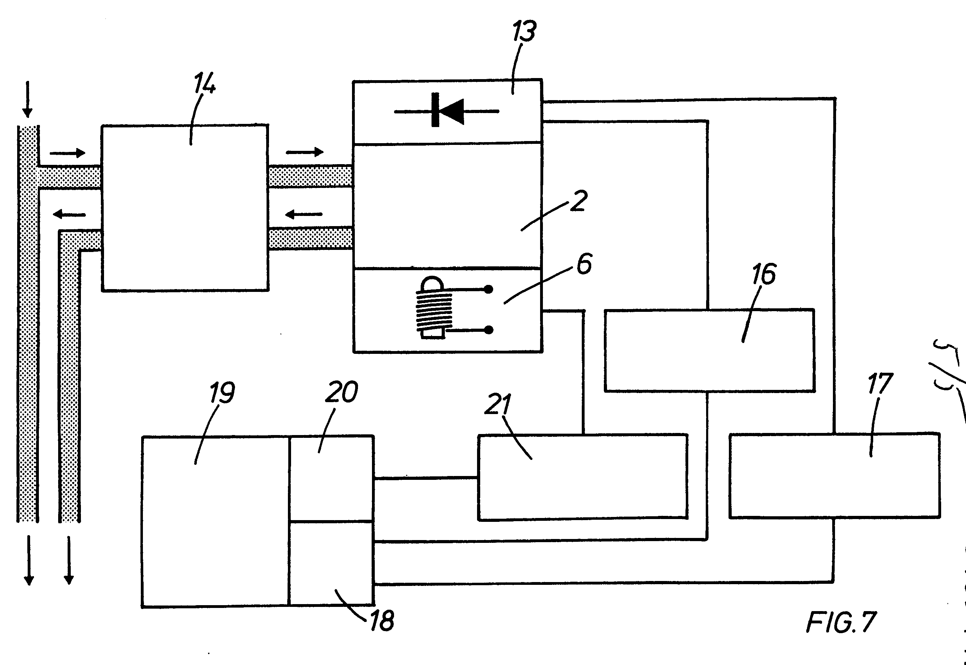

Im folgenden sei nun anhand der Fig.6 und 7 der Aufbau und die Funktion einer nach dem erfindungsgemäßen Verfahren arbeitenden Meßvorrichtung im Zusammenhang erläutert.

Die in Fig.6 dargestellte Meßvorrichtung enthält in einem Meßgefäß 2 einen Flüssigkeitsraum 3, wobei die kreisförmige Flüssigkeits-Oberfläche 4 von der bereits erwähnten Kreisschneide 1 eingefaßt wird. Die Schneide 1 besitzt eine hydrophobe Oberfläche.

Der Boden des Flüssigkeitsraumes 3 wird durch eine Membran 5 gebildet, unter der in geringem Abstand ein elektromagnetischer Impulsgeber 6 angeordnet ist.

Im Flüssigkeitsraum 3 ist oberhalb der Membran 5, jedoch unterhalb der Flüssigkeits-Oberfläche 4, eine Düse 7 angeordnet, deren Achse durch das Zentrum der kreisförmigen Flüssigkeits-Oberfläche 4 verläuft. Die oberhalb und unterhalb der Düse 7 befindlichen Bereiche des Flüssigkeitsraumes 3 stehen über einen seitlichen Flüssigkeits-Zuführkanal 8 miteinander in Verbindung. Der Flüssigkeitsraum 3 ist ferner mit einer Soll-Leckstelle 9 ver-

sehen, die einen langsamen Flüssigkeitsabzug bewirkt.

Der Zulauf der zu untersuchenden Flüssigkeit erfolgt durch einen Kanal 10, der Ablauf durch einen Kanal 11. Der Zuleitungskanal 10 steht mit einem Überlauf 12 in Verbindung, der in Höhe der Schneide 1 ausmündet.

In Fig.7 ist die gesamte Meßvorrichtung in einem Blockschaltbild veranschaulicht.

Dieses Blockschaltbild enthält das im einzelnen in Fig.6 dargestellte Meßgefäß 2 mit dem elektromagnetischen Impulsgeber 6 und einem Sensor 13. Eine Dosiereinheit 14 bewirkt mittels einer hydraulischen Kippschwingung das Auffüllen des Meßgefäßes 2 mit Flüssigkeit sowie das Entleeren. Die Amplitude und Periode dieser hydraulischen Kippschwingung ist zweckmäßig einstellbar.

Die Flüssigkeits-Oberfläche 4 (vgl. Fig.6) wird von einer nicht dargestellten Lichtquelle beleuchtet (Lichtstrahlen 15). Der Sensor 13 mißt das von der Flüssigkeits-Oberfläche 4 reflektierte Licht, das durch die an der Flüssigkeits-Oberfläche 4 erzeugten stehenden, kreisförmigen Kapillarwellen moduliert ist. Das Ausgangssignal des Sensors 13 wird einerseits über ein Tiefpaßfilter 16 und andererseits über ein Hochpaßfilter 17 und einen Analog-Digital-Wandler 18 einem Rechner 19 zugeführt. Der Rechner 19 liefert über einen Digital-Analog-Wandler 20 und einen Verstärker 21 ein Signal an den elektromagnetischen Impulsgeber 6.

Die Funktion der Meßvorrichtung ist wie folgt:

Über die Dosiereinheit 14 wird zunächst das Meßgefäß 2 mit der zu messenden Flüssigkeit aufgefüllt, bis die Flüssigkeits-Oberfläche 4 eine konvexe Wölbung zeigt (wie in Fig.6 dargestellt). Über das Tiefpaßfilter 16, das Frequenzen unterhalb etwa 20 Hz durchläßt, wird dem Rechner 19 ein Signal zugeführt, das dem Gleichlichtanteil entspricht. Dieser Gleichlichtanteil besitzt beim Füllvorgang ein erstes Maximum, wenn die Flüssigkeits-Oberfläche 4 eben ist. Hieran erkennt der Rechner 19, daß ein neuer Meßvorgang unmittelbar bevorsteht.

Ist die Auffüllung des Meßgefäßes 2 beendet, strömt also über die Dosiereinheit 14 keine weitere Flüssigkeit mehr in das Meßgefäß 2 ein, so verringert sich langsam die konvexe Wölbung der Flüssigkeits-Oberfläche 4, da über die Soll-Leckstelle 9 laufend etwas Flüssigkeit abfließt. Hat dann die Flüssigkeits-Oberfläche 4 eine ebene Gestalt erreicht, so ermittelt der Sensor 13 ein zweites Maximum des Gleichlichtanteiles des von der Oberfläche reflektierten Lichtes. Der Rechner 19 liefert nunmehr ein Signal an den Impulsgeber 6, der einen einmaligen Impuls an die Membran 5 abgibt und damit durch diese spektrale Anregung die Erzeugung stehender, kreisförmiger Kapillarwellen auf der ebenen Flüssigkeits-Oberfläche 4 auslöst.

Die an der Flüssigkeits-Oberfläche auftretenden Kapillarwellen modulieren den reflektierten Lichtstrahl. Das vom Sensor 13 aufgenommene Signal wird über das Hochpaßfilter 17, das Frequenzen zwischen 150 und 400 Hz durchläßt, und den Analog-Digital-Wandler 18 dem Rechner 19 zugeführt und von diesem mit einer Meßfrequenz von beispielsweise 1 kHz erfaßt. Nach etwa 0,3 s ist der Meßvorgang beendet, und der Rechner 19 setzt die Entleerung des Meßgefäßes 2 in Gang. Während dieses kurzen Meßintervalles verändert sich daher die Geometrie der Flüssigkeits-Oberfläche 4 nur in vernachlässigbarem Maße.

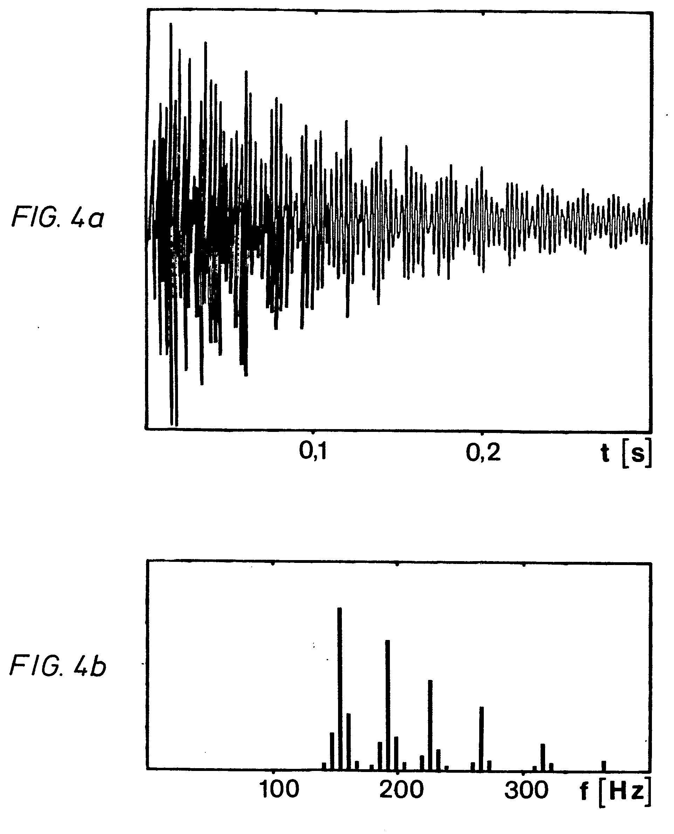

Während der Entleerung und Wiederauffüllung des Meßgefäßes berechnet der Rechner 19 die Spektralfunktion des Signals mit Hilfe der FFT (Fast Fourier Transformation). Die Grund- und Oberschwingungen der Flüssigkeits-Oberfläche treten entsprechend Fig.4b als Reihe von Einzelspitzen auf, aus denen sich die Oberflächenspannung der Flüssigkeit ermitteln läßt.

Zur Kalibrierung des Meßsystems verwendet man Flüssigkeiten mit bekannter, definierter Oberflächenspannung. Die Verschiebung des Frequenzspektrums bei Variation der Oberflächenspannung wird dem Rechner als mathematische Funktion eingegeben, die durch Anpassung an die experimentellen Werte ermittelt wird. Anhand dieser Funktion kann der Rechner die Oberflächenspannung von beliebigen Flüssigkeiten bestimmen.

Nach Beendigung der Berechnungen und der anschließenden Regelvorgänge mißt der Rechner 19 wieder den Gleichlichtanteil des Photosignals, wobei er in der erläuterten Weise anhand des ersten Maximum des Gleichlichtanteiles erkennt, wann das Meßgefäß wieder aufgefüllt ist, und wobei er einen neuen Meßzyklus beginnt, wenn beim langsamen Entleeren des Meßgefäßes über die Soll-Leckstelle 9 eine ebene Flüssigkeits-Oberfläche und damit ein zweites Maximum des Gleichlichtanteils auftritt.

Das Meßsystem ist in der Lage, ohne äußere Eingriffe periodische Messungen auch im Multiplexbetrieb durchzuführen, indem dem Meßgefäß 2 nacheinander Flüssigkeiten von unterschiedlichen Meßstellen zugeführt werden. Die Vorrichtung kann damit die verschiedensten Überwachungs- und Regelaufgaben erfüllen.

Bei dem vorstehend beschriebenen Ausführungsbeispiel erfolgte die spektrale Anregung der Flüssigkeit durch einen Impulsgeber in Form einer einmaligen Stoßanregung kurz vor dem Meßvorgang.

Im Rahmen der Erfindung ist es jedoch auch möglich, die spektrale Anregung der Flüssigkeit durch einen Rauschgenerator in Form eines Bandrauschens während des Meßvorganges vorzunehmen. Bei einer sehr starken Dämpfung der Kapillarwelle kann man mittels einer Feder das elektromagnetische Anregungssystem auf die Membran 5 aufsetzen und die Anregung über einen Rauschgenerator durchführen, der ein Bandrauschen in dem gewünschten Frequenzbereich liefert (im Schemabild der Fig.7 würde in diesem Falle der Verstärker 21 durch einen Rauschgenerator ersetzt, dem ein Bandfilter nachgeschaltet ist). Auch in diesem Falle bleibt die für das erfindungsgemäße Verfahren wesentliche Störungsunempfindlichkeit des Meßsystems von äußeren Einflüssen erhalten. Im Gegensatz zur Impulsanregung wird die Rauschanregung auch während des Meßvorganges durchgeführt.

Die Eigenresonanzen der Membran 5 liegen zweckmäßig außerhalb des für die Ermittlung der Spektralfunktion ausgewählten Frequenzbereiches. Vorteilhaft wird eine beschichtete Membran verwendet, wodurch man neben der Korrosionsfestigkeit auch eine sehr hohe Dämpfung erreicht.

)r.-Ing. Dr. jur. VOLKMAR TETZNER

RECHTSANWALT und PATENTANWALT

Van-Gogh-Straße 3
8000 MÜNCHEN 71
Telefon: (089) 79 88 03
Telegramme: „Tetznerpatent München"
Telex: 5 212 282 pate d

0159412

– 1 –

Fo 5646

Patentansprüche:

1. Verfahren zur Messung und/oder Kontrolle der
   Oberflächenspannung einer Flüssigkeit, wobei
   ein kreisförmiger Bereich der Flüssigkeits-
   Oberfläche (4) durch einen Schwingungserzeuger
   (6) zu stehenden, kreisförmigen Kapillarwellen
   angeregt und eine an dieser Flüssigkeits-Oberfläche (4) reflektierte Lichtstrahlung gemessen
   wird,
   gekennzeichnet durch folgende Merkmale:

   a) die Schwingungserzeugung erfolgt durch spektrale Anregung der Flüssigkeit;

   b) aus dem der reflektierten Lichtstrahlung entsprechenden Meßsignal wird innerhalb eines
      ausgewählten Frequenzbereiches die Spektralfunktion ermittelt.

2. Verfahren nach Anspruch 1, dadurch gekennzeichnet, daß die spektrale Anregung der Flüssigkeit
   durch einen Impulsgeber (6) in Form einer einmaligen Stoßanregung kurz vor dem Meßvorgang erfolgt.

3. Verfahren nach Anspruch 1, dadurch gekennzeichnet, daß die spektrale Anregung der Flüssigkeit
   durch einen Rauschgenerator in Form eines Bandrauschens während des Meßvorganges erfolgt.

4. Verfahren nach Anspruch 1, dadurch gekennzeichnet, daß die spektrale Anregung der Flüssigkeit im Zentrum einer den Boden des Flüssigkeitsraumes (3) bildenden, kreisförmigen Membran (5) erfolgt.

5. Verfahren nach Anspruch 1, gekennzeichnet durch folgende Merkmale:

a) es wird zunächst durch Einführen von Flüssigkeit in den Flüssigkeitsraum (3) eine konvexe Wölbung des kreisförmigen Bereiches der Flüssigkeits-Oberfläche (4) erzeugt;

b) sodann wird durch langsamen Abzug von Flüssigkeit aus dem Flüssigkeitsraum (3) die konvexe Wölbung der Flüssigkeits-Oberfläche (4) verringert;

d) hat die Flüssigkeits-Oberfläche (4) eine ebene Gestalt erreicht, erfolgt die spektrale Anregung der Flüssigkeit und die Ermittlung der Spektralfunktion des der reflektierten Lichtstrahlung entsprechenden Meßsignales.

6. Verfahren nach Anspruch 4, dadurch gekennzeichnet, daß das Meßverfahren selbsttätig und mit hoher Frequenz wiederholt durchgeführt wird, indem nach Beendigung einer Messung und Entleerung des Flüssigkeitsraumes (3) durch erneutes Einführen von Flüssigkeit in den Flüssigkeitsraum (3) wieder eine konvexe Wölbung des kreisförmigen Bereiches der Flüssigkeits-Oberfläche (4) erzeugt wird.

7. Verfahren nach Anspruch 1, dadurch gekennzeichnet, daß das der reflektierten Lichtstrahlung entsprechende Meßsignal über ein Hochpaßfilter (17), das vorzugsweise Frequenzen im Frequenzbereich zwischen 150 und 400 Hz durchläßt, einem Rechner (19) zur Ermittlung der Spektralfunktion zugeführt wird.

8. Verfahren nach Anspruch 5, dadurch gekennzeichnet, daß das der reflektierten Lichtstrahlung entsprechende Meßsignal über ein Tiefpaßfilter (16), das vorzugsweise Frequenzen unterhalb von 20 Hz durchläßt, einem Rechner (19) zugeführt wird, der anhand des Maximum des Gleichlichtanteiles das Erreichen der ebenen Gestalt der Flüssigkeits-Oberfläche (4) bestimmt.

9. Vorrichtung zur Durchführung des Verfahrens nach Anspruch 1, dadurch gekennzeichnet, daß der kreisförmige Bereich der Flüssigkeits-Oberfläche (4) durch eine scharfe Schneide (1) begrenzt ist.

10. Vorrichtung nach Anspruch 9, dadurch gekennzeichnet, daß die Schneide (1) eine hydrophobe Oberfläche aufweist.

11. Vorrichtung zur Durchführung des Verfahrens nach Anspruch 4, dadurch gekennzeichnet, daß die Eigenresonanzen der Membran (5) außerhalb des für die Ermittlung der Spektralfunktion ausgewählten Frequenzbereiches liegen.

12. Vorrichtung nach Anspruch 11, gekennzeichnet durch eine beschichtete Membran (5) hoher Dämpfung.

13. Vorrichtung nach Anspruch 11, dadurch gekennzeichnet, daß im Flüssigkeitsraum (3) oberhalb der Membran (5), jedoch unterhalb der Flüssigkeits-Oberfläche (4), eine Düse (7) angeordnet ist, deren Achse durch das Zentrum des kreisförmigen Bereiches der Flüssigkeits-Oberfläche (4) verläuft.

14. Vorrichtung nach Anspruch 9, dadurch gekennzeichnet, daß die Zuleitung (10) zum Flüssigkeitsraum (3) in Höhe der Schneide (1) einen Überlauf (12) besitzt.

15. Vorrichtung nach Anspruch 13, dadurch gekennzeichnet, daß die oberhalb und unterhalb der Düse (7) befindlichen Bereiche des Flüssigkeitsraumes (3) über einen seitlichen Flüssigkeits-Zuführkanal (8) miteinander in Verbindung stehen.

16. Vorrichtung zur Durchführung des Verfahrens nach Anspruch 5, dadurch gekennzeichnet, daß der Flüssigkeitsraum (3) mit einer den langsamen Flüssigkeitsabzug bewirkenden Soll-Leckstelle (9) versehen ist.

0159412

1/5

FIG.1a

FIG.1b

FIG.2a

FIG.2b

FIG.3a

FIG.3b

2/5

0159412

FIG. 4a

t [s]

0,1    0,2

FIG. 4b

f [Hz]

100    200    300

0159412

FIG.5a

FIG.5b

FIG. 6

FIG.7